## Europäisches Patentamt

## European Patent Office

## Office européen des brevets

(11) Publication number: **0 002 619**
**A2**

## EUROPEAN PATENT APPLICATION

(21) Application number: **78300839.4**

(22) Date of filing: **15.12.78**

(51) Int. Cl.²: **A 01 K 11/00**
**G 09 F 3/06**

(30) Priority: **15.12.77 NZ 185989**

(43) Date of publication of application:
**27.06.79 Bulletin 79/13**

(84) Designated contracting states:
**DE FR GB IT NL**

(71) Applicant: **Dore, Leslie Walter**
**58 Broughton Street**
**Gore(NZ)**

(72) Inventor: **Dore, Leslie Walter**
**58 Broughton Street**
**Gore(NZ)**

(74) Representative: **Copp, David Christopher**
**MARKS & CLERK 57-60 Lincoln's Inn Fields**
**London WC2A 3LS.(GB)**

(54) A tag and applicator therefor.

(57) A tag which is preferably for animal identification purposes. The tag (10) comprises two components (11, 12) with one (11) component hingedly coupled to the other (12). A mounting member (17, 18) extends from one component (11) and engagement means (20) are provided with the other component (12). The mounting member (17, 18) and engagement means (20) are each spaced away from the hinge coupling (15) so that by movement of the components (11, 12) about the hinge (15) the mounting member (17, 18) can be brought into engagement with the engagement means (20). The component (11) having the mounting member (17, 18) further has receiving means (21) in which the or part of the mounting member of a second tag can be located when said second tag is nested with a first tag.

An applicator tool is also disclosed and is characterised in that it has a magazine (41) in which a stack of nested tags can be loaded. Operating means are provided whereby one tag of the stack can be applied to say an animal's ear. The applied tag is automatically replaced by the next tag in the stack.

FIG. 2.

Croydon Printing Company Ltd.

0002619

- 1 -

## A TAG AND APPLICATOR THEREFOR

The invention relates to a tag which is primarily used for identification purposes and an applicator for applying the tag.

Identification tags are well known especially in the field of animal identification. These animal tags are normally applied to the ear of an animal and can be broadly placed in two catagories. In the first category reside the one piece ear tags which are applied by a trocar applicator. The ear tags of the second category are of either one or two piece construction and are applied by a mounting member such as a male member fitting with engagement means such as a female member. The ear tag of the present invention belongs to this second category.

There are a number of different criteria which are necessary for a successful ear tag. The more important criteria are; the tag must be easy to apply, have permanance of installation, provide a readily visible means of identification and be of such a construction that it is readily disengagable from obstructions such as fences, branches and the like. Few of the tags of the known art meet all these criteria. In addition all of the known tags are so designed that they must be individually installed in an applicator prior to application to the ear of an animal. To speed up the application process it would thus be desirable to have a tag which was of such a construction that it could be loaded in quantity into a magazine. An applicator tool having such a magazine could thus provide automatic reloading  after each application to considerably reduce the time taken to tag a number of animals.

The main object of the present invention is to provide a tag which has such a construction that a number of such tags can be stacked together to permit them to be applied by a magazine type applicator tool.

Broadly in one aspect the invention consists of a tag comprising first and second components with one component hingedly coupled to the other component, a mounting member extending from said first component, engagement means provided with said second component, said mounting member and engagement means being respectively spaced at a distance from the hinge coupling such that by movement of the components about the hinge coupling the mounting member can be brought into engagement with the engagement means, the first component further having receiving means in which the or part of the mounting member of a second tag can be located when said second tag is stacked on a first tag.

In a preferred form the tag is of one piece construction and the two components are of elongate shape with an integral hinge joining them together at respective ends thereof. The mounting member is preferably a stem having a head portion at the outer end thereof and the engagement means is an opening formed in the second component.  The opening in the second component and the stem of the first component are located toward the other or free ends thereof. The tag can be constructed of a relatively rigid plastics material with the stem and head portion being formed integrally therewith. The head portion is of conical shape and the greatest cross sectional diameter thereof is greater than the diameter of the opening in the second component.  The receiving means in the first component is of elongate slot form and extends longitudinally from within the hinge portion to terminate short of the stem. To assist in location of one tag when stacked upon another locating lugs are provided on the outer surface of the second component and are positioned adjacent the said opening therein.

The tag can also be constructed of resilient or semi flexible material. In this form the stem is hollow and has a tip of rigid material provided with the head portion. preferably the hard material tip is hollow.

In a second broad aspect the invention ̲ ̲ovides an applicator for a tag according to the first broad aspect said applicator including a magazine into which a stack of tags can be loaded, said magazine forming or opening into an outlet, operating means which in use is operable to cause one component of a tag located at said outlet to move relative to the other component of the tag and so move the mounting member into engagement with the engagements means of the second component.

In one form of the applicator tool the operating means consists of a pair of pivotally coupled levers or handles one of which is coupled to or has formed therewith a housing in which is slidingly engaged a plunger. The plunger is coupled to the other lever so that when the levers are moved relatively toward and away from one another the plunger moves within the housing. The housing has mounted thereto a magazine with its outlet adjacent the end of the housing through which the plunger projects. In operation the plunger engages with one component of the tag and causes it to move relative to the other component and so move the mounting member into engagement with the engagement means.

In one preferred form the magazine is of curved shape and has spring loaded means which urge a stack of tags located in the magazine toward the outlet thereof.

The preferred forms of the tag and applicator tool will be described in more detail in the following description and reference will be made to the accompanying drawings in which:-

Figure 1 is a plan view of the tag,

Figure 2 is an elevation view of the tag,

Figure 3 is an elevation view of the tag to illustrate the configuration thereof when applied to say the ear of an animal,

Figure 4 is an elevation view of a stack of three tags,

Figure 5 is a cross sectional elevation view of a modified form of the tag,

Figure 6 is a perspective view of one form of applicator,

Figure 7 is a sectional elevation view of a portion of the applicator shown in figure 6,

Figure 8 is a view similar to that of figure 7 but illustrates a modification,

Figure 9 is a schematic illustration of the magazine shown in figure 6,

Figure 10 is a side elevation view of a second form of applicator,

Figure 11 is a perspective view of a third form of applicator, and

Figure 12 is a sectioned elevation view of the barrel portion of the applicator shown in Figure 11.

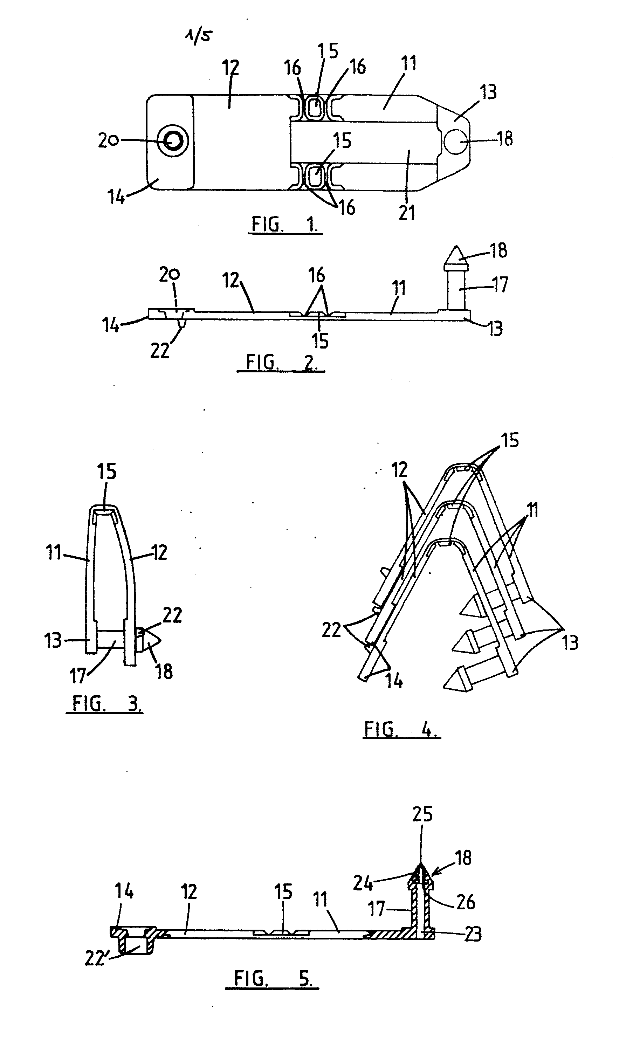

Referring to figures 1 to 3 the tag 10 is formed of a rigid or semi-rigid plastics material and is a one piece moulding. The first and second components 11 and 12 respectively are of uniform thickness throughout except for areas of increased thickness 13 and 14 respectively at each end. A hinge portion 15 is separated from the first and second components 11 and 12 by transverse areas 16 of decreased thickness. As can be seen in Figure 3 the first and second components 11 and 12 hinge about the lines 16 of decreased thickness so that the head portion 18 of stem 17 can locate within opening 20. The stem 17 and opening 20 are respectively located in the ends 13 and 14 of components 11 and 12.

The head 18 of stem 17 is of generally conical shape and the greatest cross-sectional diameter of the head is greater than the diameter of opening 20. In the preferred form opening 20 is tapered as can be seen in Figure 2. The head 18 when forced through opening 20 is, because of the difference in diameters, captured in such position.

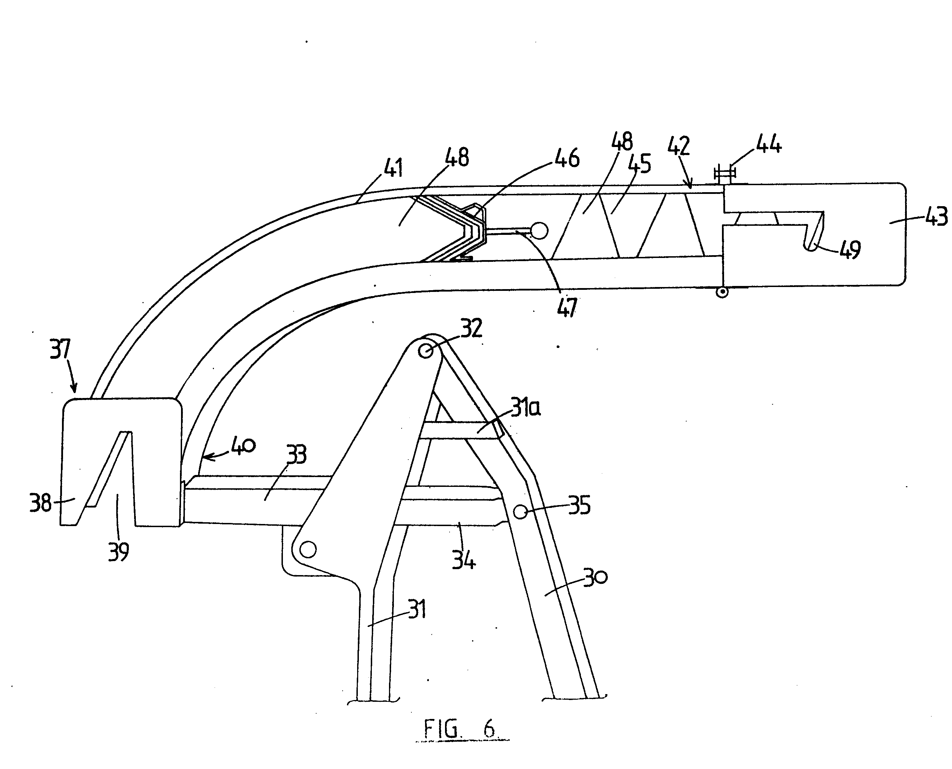

An elongate slot 21 extends from preferably just within second component 12 through the hinge portion 15 and along first component 11 to terminate at end 13. This slot 21 has its central longitudinal axis intersecting with the axes of the stem 17 and hole 20 respectively. Accordingly, and as shown in Figure 4 the tags can be stacked together so that the stem 17 and headed portion 18 of one tag can lie within the confines of the first and second components of a second tag. The slot does however allow the lower tag to be removed from the stack without having to in any way manipulate the remainder of the tags in the stack. It will be noted that in the stacked arrangement the tags are placed in a substantially V configuration by hinged components 11 and 12 about hinge coupling 15. The lowermost tag can be slid away from the stack as the stem 17 of the next tag has clearance through slot 21 of the lowermost tag.

For location purposes the second component 12 has a pair of locating lugs 22 situated one either side of opening 20. As can be seen in Figure 4 the end 14 of an upper tag locates on these locating lugs 22. Reference to Figure 4 will reveal that when in the stacked position the tags do not stack vertically but rather curve slightly in the manner shown.

Referring to Figure 5 a modified form of the tag is shown and this is a form in which the tag takes when manufactured from a resilient or semi-flexible material. In this form the stem 17 has a through bore 23. The head 18 of the stem is partly formed in plastics material but has a tip 24 of a hard material such as hard plastics or metal. This tip 24 has a bore 25 which is co-axial with bore 23 and can be either blind or extend right through the tip in the manner illustrated. Bore 25 is, however, preferably of less diameter than bore 23 so that an internal shoulder 26 is formed. This shoulder 26 engages with a shoulder on an applicator pin which forms part of the applicator tool so that tip 24 is provided with the driving force rather than the base of stem 17. When bore 25 is blind the applicator pin can drive either on the end of the blind bore or in combination on such end and shoulder 26.

In this form a collar or boss 20' is shown surrounding opening 20. This collar 20' is of a size and shape as to accomodate (and can if required retain) the head 18. The collar 20' can also if required form a locating portion in place of lugs 22.

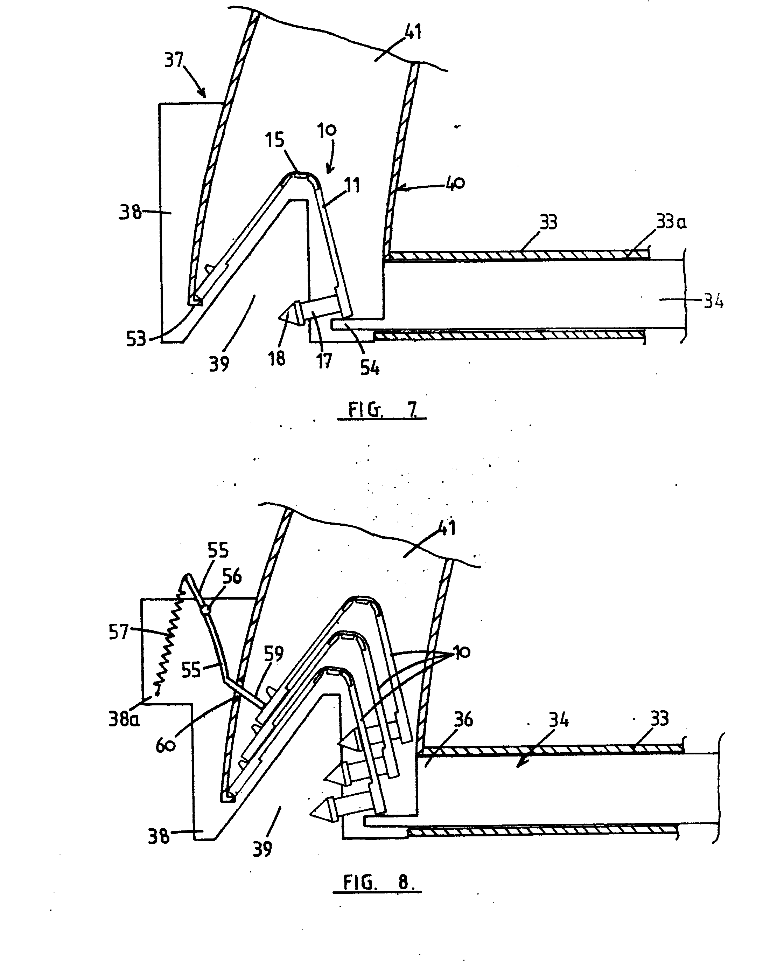

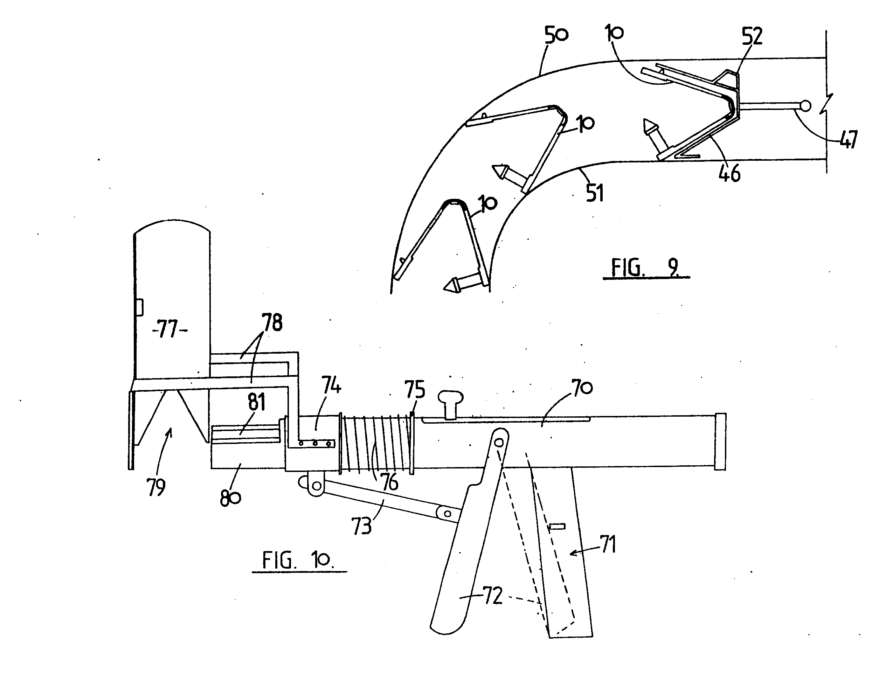

Referring now to Figures 6 and 7 one form of applicator tool by which the tag can be applied is shown. This tool has a pair of levers or handles 30 and 31 which are pivoted at their upper ends by a pivot 32. A housing 33 is coupled to lever 31 and has an internal passage 33a which extends outwardly from handle 31. A plunger 34 which is coupled to handle 30 by pivot 35 is slidingly located within passage 33a. This plunger 34 slides within housing 33 in response to movement of handle 30 relative to handle 31 so that as the handles are brought together the end 36 of plunger 34 projects further from the outer end of housing 33. Handle 30 and 31 are provided with a coil spring (not shown) at pivot 32 so that they normally take up the position shown. A width control check 31a is provided and is fixedly attached to handle 31.

The outer end of housing 33 is coupled to a breach frame 37 which includes a pair of side plates 38 into each of which is cut a substantially inverted V-shaped slot 39. The breach frame 37 is locates the outlet end 40 of a curved magazine 41. Magazine 41 can be either fixedly retained within breach frame 37 or be removably located therein.

The magazine 41 is of rectangular cross-section and a stack of tags 10 can be loaded into the magazine through inlet end 42. A cap 43 is hinged to end 42 and retained by a safety catch 44. A coil spring 45 extends from within cap 43 to engage with a control cap 46 which locates over the upper most tag 10 of the stack. The control cap 46 has a spring compression handle 47 which extends through a slot 48 in the side of magazine 41 and by this handle the operator can compress the spring 45 into cap 43 and lock the handle in recess 49 of cap 43. Preferably safety catch 44 is of such a construction that it can not be opened until the spring 45 is compressed within cap 43.

Referring to the schematic illustration of the magazine as shown in Figure 9 the curvature of outside wall 50 is greater than that of inside wall 51; this difference in curvature plus the control cap 46 ensures that the tags remain correctly stacked and arrive at the outlet 40 in the correct position. Because the tags are stacked one inside each other they tend to travel in a more or less straight line except for the inherent curvature in the stack so that by having a difference in curvature in walls 50 and 51 the stack turns more readily and there is very little distortion of tag position in the stack. A hip 52 is formed on control cap 46 to provide correct tracking around the curve as well as to assist in the correct location of the end of spring 45.

Referring now to Figure 7 there is illustrated in more detail the outlet end 40 of housing 41. In this illustration only the lower tag 10 of a stack is shown for ease of reference. This tag 10 is located by the end 14 engaging in a lip 53 at the end of housing 41. Lip 53 is not strictly necessary as end 13 of component 11 locates in a rebate 54 in the other end of plunger 34 and this holds the stack and lowermost tag in position. To apply the tag the ear of an animal is located within V-shaped slots 39 and thus between components 11 and 12. As handles 30 and 31 are moved together plunger 34 moves further out of housing 33 so pushing stem 17 forward until the head portion 18 is punched through the ear of the animal and opening 20 so that the tag is locked in the configuration shown in Figure 3. As the distance between components 11 and 12 is now less than the distance between lip 53 and rebate 54 the tag is free to move from the magazine 41 and breach frame 37 arrangement. The tag is also free of the next tag in the stack as stem 17 of this next tag moves from the applied tag by way of slot 21. Under the pressure of spring 45 this next tag then drops down into engagement with lip 53 and rebate 54 so as to be ready for application.

The breach frame assembly can be modified as shown in Figure 8. In this modification plates 38 are provided with extensions 38a between which is located a latch 55. This latch pivots about an axis 56 and is spring loaded by spring 57. The free end 58 of latch 55 is provided with a pin 59 which under the bias of spring 57 normally protects through an opening 60 in the wall of magazine 41. This pin 59 engages in opening 20 of the third tag 10 in the stack thus preventing the tags from lifting as the lower tag is being applied. This modification can provide assistance to the spring pressure 45 especially as the stack decreases in number or else can be used in preference to spring 45 but would require the operator to manually push the tags downward after each application.

With a tag of the form illustrated in Figure 5 the end of plunger 34 is provided with a projecting pin which engages in the bore 23 of stem 17 to force against shoulder 26 at one or in combination shoulder 26 and the blind end of bore 5. With such a flexible material the arrangement as shown in Figure 8 may be required as standard equipment to prevent the tag being applied from buckling upwardly.

Referring now to Figure 10 a second form of applicator tool is illustrated. This tool has a barrel 70 to which is attached a pistol type grip 71 and adjacent thereto a pivoted handle 72. Handle 72 is coupled by a link 73 to a sliding collar 74 situated on the forward end of barrel 70. A spring 76 is located between collar 74 and a fixed member 75. The magazine 76, which is illustrated as being vertically disposed though could be of the curved arrangement shown in Figure 6, is coupled to collar 74 by a pair of arms 78. A breach frame arrangement. 79 is provided at lower or outlet end of magazine 77 and the ends of first and second components 11 and 12 of tag 10 locate on ledges (not shown) in much the same way is that illustrated in Figure 7.

The outer end 80 of barrel 70 is formed with a rebate 81 and this rebate engages with the lower end of component 11 to force the head 18 of stem 17 through the animal's ear and into opening 20 in component 12. Unlike the tool illustrated in Figure 6 the rebate 81 remains stationary and breach frame 79 moves toward end 80 due to collar 74 sliding along barrel 70 in response to lever 72 being pulled toward grip 71.

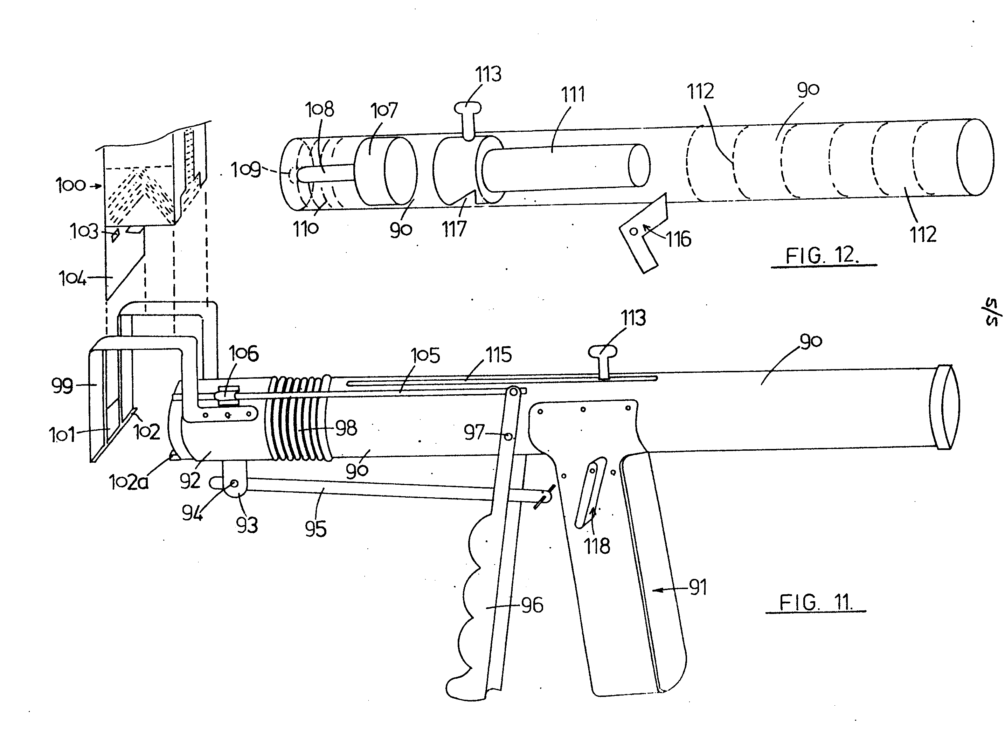

Referring to figures 11 and 12, the barrel 90 of the applicator is cylindrical in shape and attached thereto is a hand grip 91.

At the front of the barrel 90 is a breech sleeve 92 being located in position by projection 93 which is pivoted at 94 to breech clamping rod 95. The breech clamping rod 95 is drawn longitudinally by handle 96 which is pivoted about a pin 97. Longitudinal movement of rod 95 slides breech sleeve 92 against breech return spring 98.

Adjoined to breech sleeve 92 is the tag magazine frame 99 and this comprises substantially two U shaped members spaced apart and riveted onto each side of the breech sleeve 92. The frame is provided with a backing plate 101 the bottom most edge of which is formed into a lip 102.

The tag magazine 100 consists of a box formed from sheet material preferably plastics material into which the nested tags are spring loaded. Magazine 100 is provided at the back face thereof with a backing plate 104 which locates on the lip 102 of the magazine frame 99. Two holes 103 are provided in the backing plate 104 so that tag locating rods 105 may engage therein thus positioning a tag against lip 102 prior to application.

Tag locating rods 105 extend longitudinally along barrel 90 being located by guides 105 and pivoted at their rear most ends to the tag ejector handle 96. The breech clamping rod 95, and tag locating rods 105 travel in opposite directions when tag ejector handle 96 is worked. Therefore, as the magazine frame 99 is drawn toward head of the gun by rod 95 a tag is fed from magazine 100 by the action of the forwardly moving rods and is then located by rods 105 prior to application. This operation is achieved by the interaction of the rods 105 with tags 10. As rods 105 move into the magazine 100 the ends thereof engage with the sloping leg of the tag thus urging the tag down into the magazine frame. When the tag is located within the frame the rods pass across the top of the tag to locate in locating holes 103. Upward movement of the tag during the tagging operation is thus prevented by rods 105 and downward movement of the tag is prevented by lip 102 and opposing lip 102a.

Tagging is achieved by tagging plunger 107 forcing a stem 17 through hole 20. This operation takes place after the animal's ear is placed between the front of the barrel 10 and under the tag and the tag ejector has been worked as hereinbefore described.

The tagging plunger 107 is situated inside barrel 90 the front of which is blanked off save for a small hole 109 through which the plunger strike 108 projects. The plunger strike 108 is hollow so as to allow entry of stem 17. A return spring 110 returns the plunger 107 after tagging takes place. Motion is relayed to tagging plunger 107 by a second plunger 111. This plunger 111 is spring driven by spring 112 which is housed in the rear most end of barrel 90. Spring 112 is charged by means of a hand held handle 113 which is screwed into plunger 111, and by mean of a slot 115 in the barrel 90, is used to compress the charge spring 112 sufficiently so as to enable lock 116 to locate recess 117 in the plunger. Lock 106 is released by trigger 118 which is activated by the end of breech rod 95.

It can be seen that tag ejector handle 96 performs three functions, firstly by means of breech rod 95, it clamps the tag 10 and animal's ear to the front of the barrel, locates by means of rods 105 the tag in the breech and finally activates the trigger 118 which releases the plunger lock 116 thus releasing plunger 111 which proceeds to force the tagging plunger 108 thus driving stem 17 through the ear to engage in opening 20. At the end of this stage the plunger returns spring 100 returns plunger 108 clear of breech assembly, the breech sleeve 92 is returned by spring 98 thus returning the magazine frame 99 whereby a fresh tag falls into place, the cocking handle 113 is pulled back thus charging spring 112 for the next sequence.

By being of one piece construction the tag according to the present invention is economical to manufacture and by using the known method of a male member fitting within a female member for coupling is easy to apply. The tagging operation can, however, be reduced in time by the fact that the tags are readily stackable and can thus be loaded in a magazine type applicator. With the tagging of sheep for example the operator merely has to move from one sheep to another and apply a tag without having to manually load the applicator as is the case with known tags. The tag can form an identification system either by colour coding or else the outer face of second component 12 can be provided with indica if a numbering system is to be employed. The tag fits snuggly over the top or bottom of the animals ear and is not readily open to snagging and obstacles such as the branches of trees, fence wires etc. A tag manufactured of flexible or semi-flexible material further obviates the possibility of snagging taking place. The applicator can be provided with a removable magazine so that preloaded

0002619

- 12 -

magazines can merely be clipped into the applicator once a magazine is emptied thus further reducing the time taken to load the applicator with a new supply of tags.

It will be appreciated that tags for different purposes may be used with the applicator, for instance, metal or plastic tags for identification of packages or other articles.

CLAIMS

1. A tag comprising first and second components with one component hingedly coupled to the other component, a mounting member extending from said first component, engagement means provided with said second component, said mounting member and engagement means being respectively spaced at a distance from the hinge coupling such that by movement of the components about the hinge coupling the mounting member can be brought into engagement with the engagement means, the first component further having receiving means in which the or part of the mounting member of a second tag can be located when said second tag is stacked on a first tag.

2. A tag as claimed in claim 1 wherein the mounting member is a stem having a head portion at the outer end thereof, and said engagement means is an opening formed in said second component, the size of said opening being less than the greatest cross sectional size of said head portion.

3. A tag as claimed in claim 1 or 2 wherein the receiving means is an aperture formed in the first component.

4. A tag as claimed in claim 3 wherein said aperture is an elongate slot which extends from said hinge coupling and terminates at an adjacent said mounting member.

5. A tag as claimed in claim 4 wherein said elongate slot also extends through said hinge coupling.

6. A tag as claimed in any one of the preceding claims wherein the two components, hinge coupling, mounting member and engagement means are of integral construction, the two components being of elongate panel configuration joined end to end by the hinge coupling, said hinge coupling being formed by a pair of spaced apart transverse lines of reduced thickness.

7. A tag as claimed in any one of preceding claims 2 to 6 wherein the tag is formed of a rigid or semi-rigid plastics material the stem being of circular cross section and the head portion being of conical shape, the said opening having a diameter which is less than the greatest cross sectional diameter of said head portion.

8. A tag as claimed in any one of claims 2 to 6, wherein the tag is formed of a resilient material the stem being of hollow construction and said head portion has a hard material tip fitted thereto.

9. A tag as claimed in any one of the preceding claims wherein at least one locating means is provided with the second component for location of the free end of the first component when one tag is stacked on another.

10. An applicator tool for a tag according to claim 1 wherein said tool includes a magazine into which a stack of tags can be loaded, said magazine forming or opening into an outlet, operating means which in use is operable to cause one component of a tag located at said outlet to move relative to the other component of the tag and so bring the mounting member and engagement means into engagement.

11. An applicator as claimed in claim 10 wherein said operating means is formed by a pair of pivotally coupled levers or handles one of which is coupled to a plunger means, said plunger means having a receiving portion with which the free end of one component of the tag at the outlet can engage.

12. An applicator as claimed in claim 10 or 11 wherein said magazine includes means for moving said stack of tags towards the outlet end thereof.

13. An applicator as claimed in claim 12 wherein said moving means is a spring engaged between an end cap of the magazine which is remote from the outlet end and the last tag of said stack.

3.

14. An applicator as claimed in any one of claims 10 to 13 wherein tag engaging means are provided adjacent the outlet said engaging means having a member which engages with a tag in the stack so as to maintain the tags between it and the outlet in position within the magazine during application of the tag at the outlet, said member being movable to allow the stack to move in the magazine once the tag at the outlet has been applied.

15. An applicator as claimed in claim 10 wherein means are provided to isolate the tag at the outlet from the stack prior to the operating means coming into use.

1/5

FIG. 1.

FIG. 2.

FIG. 3.

FIG. 4.

FIG. 5.

FIG. 6

0002619

FIG. 7.

FIG. 8.

FIG. 9.

FIG. 10.

FIG. 12.

FIG. 11.

5/5

0002619